# EUROPÄISCHE PATENTANMELDUNG

(11) **EP 2 722 360 A1**
(43) Veröffentlichungstag der Anmeldung: **23.04.2014**
(21) Anmeldenummer: 13188919.8
(22) Anmeldetag: 16.10.2013
(51) Int. Cl.: C08K 5/09, C08K 5/3475, C08L 29/14, C08J 5/18, C08K 5/134

(54) **PVB-Folie mit hohem UV-Schutz und geringem Gelbwert für Verbundsicherheitsglas**

(30) Priorität: 18.10.2012 EP 12189149; 27.12.2012 EP 12199448; 16.01.2013 EP 13151519
(71) Anmelder: Kuraray Europe GmbH, 65795 Hattersheim (DE)
(72) Erfinder: Keller, Uwe, Dr., D-53177 Bonn (DE); Lellig, Philipp Dr., 53840 Troisdorf (DE)
(74) Vertreter: Kisters, Michael Marcus

(57) **Zusammenfassung**

Die Erfindung betrifft eine Weichmacherhaltige Folie ,die in einer Dicke von 0,76 mm bei Messung gemäß EN 410 zwischen 2 x 2 mm Floatglas bei 400 nm eine Transmission kleiner 20% kleiner als 20% und einen Gelbwert db kleiner 3, enthaltend mindestens ein Polyvinylacetal, mindestens einen Weichmacher und mindestens einen UV-Absorber gemäß einer oder mehrerer Verbindungen der Formel (1) 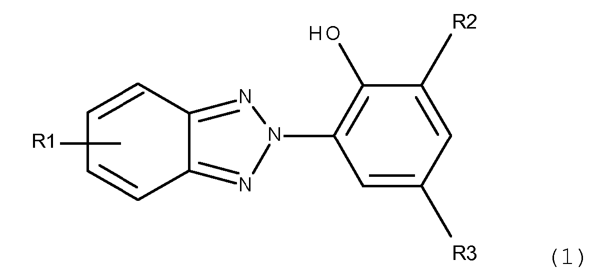 mit R1 = H, Halogenatom und R2, R3 = Alkyl-, Hydroxyalkyl-, Alkoxyalkyl-, Acyloxyalkylrest mit 1 bis 20 Kohlenstoffatomen, jeweils unsubstituiert oder durch Aldehyd-, Keto- oder Epoxidgruppen substituiert
und ein Antioxidants gemäß der Formel (3) 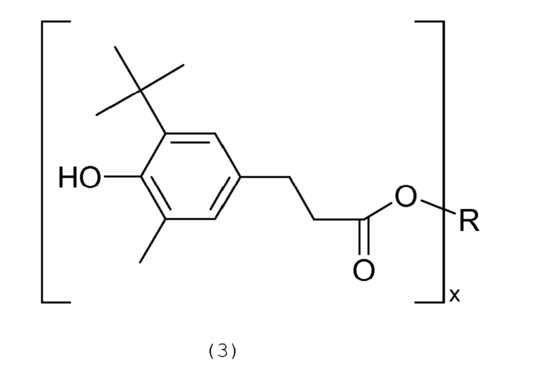 mit R = Kohlenwasserstoffradikal eines polyfunktionellen Alkohols, Oligoglykole mit 1 bis 10 Glykoleinheiten oder Kohlenwasserstoffrest mit 1 bis 20 Kohlenstoffatomen sowie X = 1, 2, 3 oder 4.

## Beschreibung

### Technisches Gebiet

Die Erfindung betrifft weichmacherhaltige Folien auf Basis von Polyvinylacetal mit hohem UV-Schutz und geringem Gelbwert sowie damit hergestellte Glaslaminate.

### Stand der Technik

Marktübliche weichmacherhaltige Polyvinylbutyral-Folie (PVB-Folie) für Verbundverglasungen ist seit vielen Jahrzehnten mit UV-Absorbern ausgerüstet, damit UV-Strahlung im Gegensatz zum sichtbaren Licht das Verbundglas nicht vollständig durchdringen kann. Auf diese Weise kann auf einfache Art ein Schutz vor schädigender UV-Strahlung für sich hinter dem Verbundglas befindliche Personen oder Objekte sichergestellt werden. Dies stellt neben dem Schutz vor Schnittverletzungen den wesentlichen Eigenschaftsvorteil gegenüber monolithischem Glas dar, da dieses für UV-Strahlung weitgehend transparent ist.

Besonders bewährt und verbreitet werden als UV-Absorber Abkömmlinge des 2-Hydroxyphenylbenzotriazols verwendet, welche mit verschiedenen Substitutionsmustern z.B. unter den Handelsnamen Tinuvin P, Tinuvin 328, Tinuvin 327, Tinuvin 326 erhältlich sind. UV-Absorber vom Benzotriazol-Typ sind in PVB-Folie für ihre herausragende Langzeitstabilität, gute Löslichkeit und hohe Absorptionsleistung im gesamten UV-Bereich bekannt. Je nach Substitutionsmuster findet eine Absorption aber mehr oder weniger stark auch noch im sichtbaren Bereich des Spektrums statt, so dass diese UV-Absorber je nach Einsatzmenge und Substituentenverteilung eine gewisse Gelbfärbung der PVB-Folie verursachen können. Daher weisen PVB-Folien mit einem gegenüber den Standardeinsatzmengen leicht erhöhten Anteil an UV-Absorber bereits einen messbar erhöhten Gelbwert auf. In der Regel werden daher nur solche Typen und Einsatzmengen von UV-Absorbern verwendet, dass eine vollständige Absorption der Strahlung (Strahlungstransmission kleiner 1%) im UV-A-Bereich nur bis zu einer Wellenlänge von circa 370 nm erreicht wird. Im Bereich von 370 - 400 nm wird die Strahlungstransmission lediglich reduziert und das Verbundglas bleibt für diesen Bereich teilweise transparent.

Neben UV-Absorbern wird Polyvinylbutyral häufig mit phenolischen Antioxidantien ausgerüstet, deren Aufgabe es ist, z.B. bei der Folienextrusion durch hohe Verarbeitungstemperaturen ausgelöste radikalische Spaltungsreaktionen zu unterbinden. Hierdurch wird die Länge der Polymerketten im Wesentlichen konstant gehalten, so dass die mechanischen Eigenschaften des extrudierten Materials als Folge des Extrusionsvorganges nicht verschlechtert werden.

Viele phenolische Antioxidantien bringen jedoch den Nachteil mit sich, je nach Extrusionsbedingungen eine Gelbfärbung zu verursachen, welche auf Reaktionsprodukte der Antioxidantien zurückzuführen ist. Auch in einer fertigen, bereits zwischen zwei Glasscheiben verklebten PVB-Folie können phenolische Antioxidantien unter UV-Bestrahlung - insbesondere bei erhöhter Temperatur - nachträglich eine Vergilbung verursachen, welche nicht nur aus ästhetischen Gründen unerwünscht ist, sondern auch die Lichttransmission des Glaslaminates mit der Zeit reduziert.

Besonders die kommerziell bedeutendste Gruppe phenolischer Antioxidantien mit der Teilstruktur (2,5-di-tert-butyl-4-hydroxyphenyl)propionat, welcher unter anderem Produkte vom Typ Irganox 1010, Irganox 1076, Irganox 1035 angehören, als auch solche vom Typ Hostanox 03, führt bei Verwendung in PVB-Folie bei UV- und/oder Temperatureinwirkung im Glaslaminat zu Vergilbung. Als phenolische Antioxidantien vom Typ Hostanox 03 werden Verbindungen enthaltend oder aufgebaut aus der Gruppe bis(hydroxyl alkyl)phenylalkylsäureglycolester verstanden.

Während für die überwiegende Zahl der Einsatzmöglichkeiten von Verbundsicherheitsglas ein Schutz vor UV-Strahlung bis zu einer Wellenlänge von 370 - 380 nm ausreichend ist, gibt es spezielle Anwendungen, für die eine vollständige Absorption der Strahlung bis zu einer Wellenlänge von 400 nm wünschenswert ist. So ist z.B. zum Schutz von Gemälden in Museen, zum Schutz von Textilien in Schaufenstern oder in Kraftfahrzeugen eine vollständige Absorption der UV-Strahlung erforderlich, um photochemisch initiierte Abbau- und Alterungsprozesse besonders lichtempfindlicher Materialien zu verhindern. Ein solcher Schutz vor UV-Strahlung kann auch in Photovoltaikmodulen oder für Display-Anwendungen wünschenswert sein.

Zum Schutz vor UV-Strahlung offenbaren US2009/0035583a1 und US 5618863 die Verwendung von Benzotriazolen als UV-Stabilisator in Folien für Verbundsicherheitsglas. Diese Publikationen geben keine Hinweise auf die Vergilbung der Folie unter Sonnenlicht bzw. deren Gelbwert.

### Aufgabe

Aufgabe der vorliegenden Erfindung war es, eine Klebefolie z.B. für Verbundglas bereitzustellen, die bei einer Wellenlänge von 400 nm eine niedrige Transmission und im sichtbaren Bereich des Lichts einen niedrigen Gelbwert und eine ausreichende Lichttransmission aufweist.

Überraschenderweise wurde gefunden, dass trotz Verwendung von erhöhten Einsatzmengen an UV-Absorber vom Benzotriazol-Typ gemäß Formel (1) eine weichmacherhaltige Polyvinylacetalfolie hergestellt werden kann, die mit einer Strahlungstransmission bis zu einer Wellenlänge von 400 nm unter 20% einen wesentlich verbesserten UV-Schutz besitzt, dabei aber gleichzeitig einen nur leicht erhöhten Gelbwert aufzeigt. Dies wird durch die erfindungsgemäße Auswahl an UV-Stabilisatoren und Antioxidantien erreicht.

### Darstellung der Erfindung

Gegenstand der vorliegenden Erfindung sind daher weichmacherhaltige Folien, die in einer Dicke von 0,76 mm bei Messung gemäß EN 410 zwischen 2 x 2 mm Floatglas bei 400 nm eine Transmission kleiner 20% und einen Gelbwert db kleiner 3, enthaltend mindestens ein Polyvinylacetal, mindestens einen Weichmacher und mindestens einen UV-Absorber wobei die Folie
- als UV Absorber 0,5 bis 5 Gew.% einer oder mehrerer Verbindungen der Formel (1) 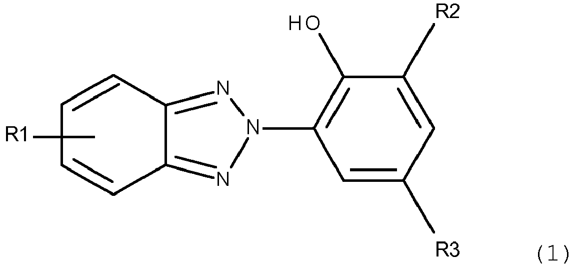 mit R1 = H, Halogenatom und R2, R3 = Alkyl-, Hydroxyalkyl-, Alkoxyalkyl-, Acyloxyalkylrest mit 1 bis 20 Kohlenstoffatomen, jeweils unsubstituiert oder durch Aldehyd-, Keto- oder Epoxidgruppen substituiert
- und als Antioxidants 0.005 - 0.5 Gew. % mindestens eine Verbindung der Formel (3) 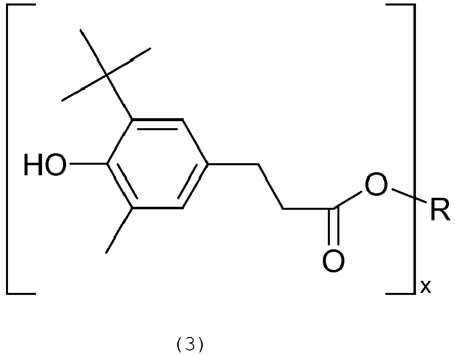 mit R = Kohlenwasserstoffradikal eines polyfunktionellen Alkohols, Oligoglykole mit 1 bis 10 Glykoleinheiten oder Kohlenwasserstoffrest mit 1 bis 20 Kohlenstoffatomen sowie X = 1, 2, 3 oder 4 enthält.

Als Antioxidants gemäß Formel 3 können insbesondere zweikernige phenolische Antioxidantien vom Typ Lowinox 44B25 oder Irganox 129, einkernige Antioxidantien vom Typ Songsorb 2908 (CAS: 67845-93-6), BHT (CAS: 128-37-0), p-Octylphenol oder mehrkernige Verbindungen wie z.B. Topanol CA (CAS: 1843-03-4) oder Wingstay L (31851-03-3) eingesetzt werden.

Bevorzugt werden solche UV-Absorber gemäß Formel 1 verwendet, bei denen der Rest R1 für ein Chloratom steht.

Besonders bevorzugt enthalten erfindungsgemäße Folien als UV-Absorber gemäß Formel 1 2-(3-tert-butyl-2-hydroxy-5-methylphenyl)-5-chloro-2H-benzotriazol, CAS-Nr. 3896-11-5 als UV-Absorber. Dieser ist kommerziell z.B. von CIBA als "Tinuvin 326", von BASF als "Uvinul 3026" oder von Everlight Chemical als "Eversorb 73" erhältlich.

In einer ersten Variante der Erfindung enthalten erfindungsgemäße Folien UV-Absorber gemäß Formel (1), in einer Menge von 0,5 bis 5 Gew.%, bevorzugt 0,7 bis 3 Gew.% und am meisten bevorzugt 0,8 bis 1,5 Gew.%.

In einer zweiten Variante der Erfindung enthalten erfindungsgemäße Folien UV-Absorber gemäß Formel (1), in einer Menge von 5 bis 2,5 Gew.%, bevorzugt 4,0 bis 2,5 Gew.%.

Erfindungsgemäße Folien können neben den Verbindungen der Formel (3) weitere Antioxidantien enthalten. Da bei Verwendung der UV-Absorber vom 2-Hydroxyphenylbenzotriazol-Typ in erfindungsgemäßer Menge der stark verringerte Anteil an UV-A Strahlung dazu führen kann, dass aus bestimmten Antioxidantien hervorgehende gelbgefärbte Abbauprodukte nicht mehr durch Strahlung gebleicht werden können, werden bevorzugt solche Antioxidantien verwendet, welche nicht eine Teilstruktur (2,5-di-tert-butyl-4-hydroxyphenyl)propionat bzw. eine Struktur vom Typ Hostanox 03 beinhalten, da diese schon während der Extrusion zur Gelbfärbung neigen Als Struktur vom Typ Hostanox 03 werden bis(hydroxyl alkyl)phenylalkylsäureglycolester verstanden.

In einer dritten Variante der Erfindung ist daher bevorzugt, dass die erfindungsgemäße Folie weniger als 1500 ppm an Antioxidantien der Formel (2) bzw. mit der Teilstruktur (2,5-di-tert-butyl-4-hydroxyphenyl)propionat oder des Typs Hostanox 03 enthält. 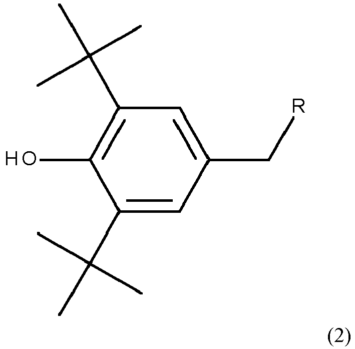 mit R = Kohlenwasserstoffradikal eines polyfunktionellen Alkohols, Oligoglykole mit 1 bis 10 Glykoleinheiten Kohlenwasserstoffrest mit 1 bis 20 Kohlenstoffatomen, N,P, S-substituierte Kohlenwasserstoffreste mit 1 bis 30 Kohlenstoffatomen oder Carbonsäureesterreste mit 1 bis 30 Kohlenstoffatomen in der Alkoholgruppe

Bevorzugt enthält die erfindungsgemäße Folie solche Antioxidantien gar nicht oder nur in einem geringem Anteil, d.h. bevorzugt nicht mehr als 1000 ppm, bevorzugt zu nicht mehr als 500 ppm, bevorzugt zu nicht mehr als 250 ppm, nicht mehr als 100 ppm, nicht mehr als 50 ppm und am meisten bevorzugt zu 0 ppm.

Beispielhaft für Verbindungen der Formel (2), die in der dritten Variante nicht oder nur in geringem Anteil eingesetzt werden solche mit den folgenden CAS-Nummern: 2082-79-3, 12643-61-0, 35074-77-2, 23128-74-7, 976-56-7, 65140-91-2, 1709-70-2, 34137-09-2, 27676-62-6, 6683-19-8, 41484-35-9, 991-84-4, 63843-89-0, 4221-80-1, 67845-93-6.

Ebenso beispielhaft für Verbindungen der Formel (2), die in der dritten Variante nicht oder nur in geringem Anteil eingesetzt werden solche gemäß den folgenden Strukturformeln. 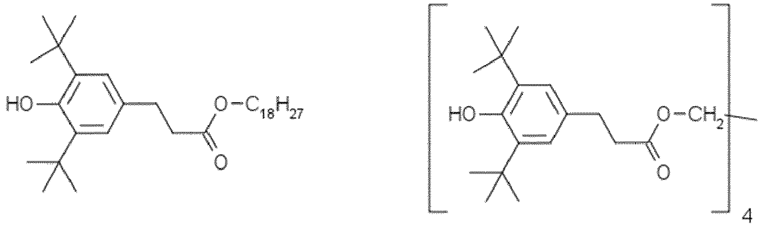 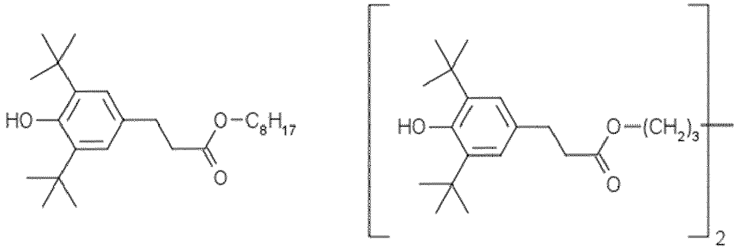 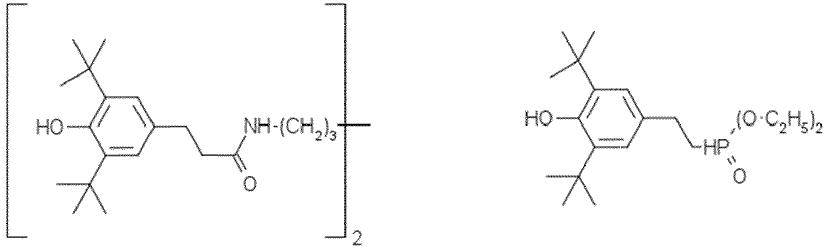 (ausgewählte Verbindungen der Formel 2)

Verbindungen dieser Art sind z.B. im "Plastics Additives handbook" 5th Edition, Hanser-Verlag im Kapitel "Primary antioxidants" zu finden.

Erfindungsgemäß eingesetzte Antioxidantien, welche die Teilstruktur (2,5-di-tert-butyl-4-hydroxyphenyl)propionat oder die Struktur vom Typ Hostanox 03 nicht enthalten können in einer Menge von 0,005 bis 0,5 Gew.%, bevorzugt 0,02 bis 0,15 Gew.% und am meisten bevorzugt 0,03 bis 0,1 Gew.% in der Folie enthalten sein.

Solche geeigneten Antioxidantien sind z.B. Verbindungen der Formel (3) oder zweikernige phenolische Antioxidantien vom Typ Lowinox 44B25 oder Irganox 129, einkernige Antioxidantien vom Typ Songsorb 2908 (CAS: 67845-93-6), BHT (CAS: 128-37-0), p-Octylphenol, mehrkernige wie z.B. Topanol CA (CAS: 1843-03-4) oder Wingstay L (31851-03-3). 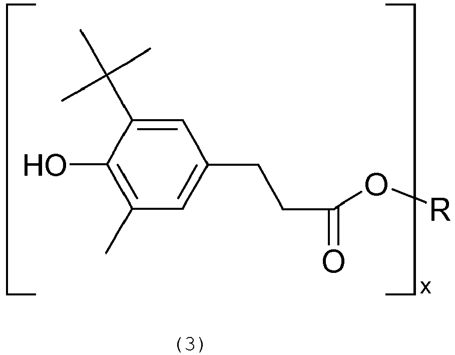 mit R = Kohlenwasserstoffradikal eines polyfunktionellen Alkohols, Oligoglykole mit 1 bis 10 Glykoleinheiten oder Kohlenwasserstoffrest mit 1 bis 20 Kohlenstoffatomen sowie X = 1, 2, 3 oder 4

Ebenfalls kommen phenolische Antioxidantien in Betracht, welche ein oder mehrere Schwefelatome enthalten, jedoch die Teilstruktur (2,5-di-tert-butyl-4-hydroxyphenyl)propionat oder die vom Typ Hostanox 03 nicht enthalten. Antioxidantien gemäß Formel (3) können insbesondere Triethylenglykol-bis-3-(3-tert-butyl-4-hydroxy-5-methylphenyl)propionat, CAS-Nr. 36443-68-2 sein. Dieses ist kommerziell z.B. von Songwon als "Songnox 2450" oder von CIBA als "Irganox 245" erhältlich.

Selbstverständlich können durch Variation der Substituenten auf einfache Weise weitere analoge Strukturen generiert werden, welche entsprechend im Rahmen der Erfindung eingesetzt werden können.

Erfindungsgemäße Folien weisen in einer Dicke von 0,76 mm bei Messung gemäß EN 410 zwischen 2 x 2 mm Floatglas bei 400 nm eine Transmission kleiner 20%, bevorzugt kleiner 10%, bevorzugt kleiner 5%, bevorzugt kleiner 3% und besonders bevorzugt kleiner 1% auf.

Weiterhin weisen erfindungsgemäße Folien eine UV-Transmission gemäß ISO 13837 Conv. A (300 - 400 nm) von kleiner 1%, bevorzugt kleiner 0,5% und besonders bevorzugt kleiner 0,05% auf.

Gleichzeitig ist der Gelbwert (db) erfindungsgemäßer Folien kleiner 3, bevorzugt kleiner 2,5, bevorzugt kleiner 2 und besonders bevorzugt kleiner 1,8. Die Messung des Gelbwert (db) ist in den Beispielen beschrieben.

Die Gelbheit kann auch durch die Transmission der Folie nach EN 410 bei 430 nm bestimmt werden. Insbesondere weisen erfindungsgemäße Folien daher bei einer Dicke von 0,76 mm in einem Laminat zwischen zwei Scheiben Klarglas (z Planilux) mit jeweils einer Dicke von 2 mm eine Lichttransmission bei 430 nm gemäß EN 410 von größer 75%, besonders bevorzugt von größer 80%, 85%, 86%, 87% oder 88% auf.

Selbstverständlich ändern sich die Werte für die Transmission bei 400 nm sowie für den Gelbwert bei Variation der Foliendicke entsprechend.

Zusätzlich zur Verwendung geeigneter UV-Absorber und Antioxidantien kann die Einstellung eines geringen Alkalititers der erfindungsgemäßen Mischung z.B. bei der Neutralisation des Polyvinylacetal verbesserte Eigenfarbe und photothermische Stabilität der erfindungsgemäßen Folie bewirken.

Der Alkalititer wird, wie in den Beispielen angegeben, durch Neutralisation der erfindungsgemäßen Mischung bzw. Folie mit Salzsäure bestimmt und liegt bevorzugt zwischen 2 und 70, insbesondere zwischen 3 und 50 und am meisten bevorzugt zwischen 5 und 30.

Die Einstellung des Alkalititers kann durch entsprechende Neutralisation des Polyvinylacetals während oder nach dessen Herstellung durch Acetalisierung von Polvinylalkohol erfolgen oder durch Zugabe von Metallsalzen zur erfindungsgemäßen Mischung. Die Metallsalze fungieren bei der Verwendung der erfindungsgemäßen Folien für Verbundglaslaminate in der Regel auch als Antihaftmittel.

Erfindungsgemäße Folien können als Antihaftmittel Erdalkalimetall-, Zink-, Aluminium- bzw. Alkalimetallionen enthalten. Diese liegen in der Mischung/Folie in Form der Salze von ein- oder mehrwertigen anorganischen oder ein- oder mehrwertigen organischen Säuren vor. Beispiele für Gegenionen sind z.B. Salze organischer Carbonsäuren wie etwa Formiate, Acetate, Trifluoracetate, Propionate, Butyrate, Benzoate, 2-Ethylhexanoate usw., wobei bevorzugt Carbonsäuren mit weniger als 10 C-Atomen, bevorzugt weniger als 8, bevorzugt weniger als 6, bevorzugt weniger als 4 und besonders bevorzugt mit weniger als 3 C-Atomen verwendet werden. Beispiele für anorganische Gegenionen sind Chloride, Nitrate, Sulfate, Phosphate. Weitere Gegenionen können den Tensiden zuzurechnende Anionen sein, wie etwa Sulfonate oder Phosphatische Tenside.

Bevorzugt enthält die erfindungsgemäße Folie mehr als 5 ppm, bevorzugt mehr als 10 ppm, bevorzugt mehr als 15 ppm, bevorzugt mehr als 20 ppm, bevorzugt mehr als 25 ppm Ionen ausgewählt aus der Gruppe der Erdalkalimetalle (Be, Mg, Ca, Sr, Ba, Ra), Zink und Aluminium. Um unerwünschte Trübung zu vermeiden, sollten andererseits aber nicht mehr als 250 ppm der genannten mehrwertigen Metalle enthalten sein.

Gleichzeitig ist der Gehalt an Alkalimetallionen (Li, Na, K, Rb, Cs, Fr) in der weichmacherhaltigen, auf Polyvinylacetal basierenden Folie möglichst niedrig einzustellen. Bevorzugt enthält die Folie weniger als 150 ppm, bevorzugt weniger als 100 ppm, bevorzugt weniger als 75 ppm, bevorzugt weniger als 50 ppm, bevorzugt weniger als 25 ppm, bevorzugt weniger als 10 ppm und besonders bevorzugt weniger als 5 ppm Alkalimetallionen.

Überraschenderweise wurde festgestellt, dass erhöhte Mengen an erfindungsgemäß verwendetem Benzotriazol UV-Absorber trotz der Fähigkeit zur Komplexierung 2-wertiger Metallionen die Haftungseinstellung nicht negativ beeinflussen. Insbesondere ist es möglich, reduzierte Haftungsniveaus einzustellen, wie sie bei der Verwendung von PVB/Glas-Laminaten im Fahrzeugbereich zum Erhalt ausreichender Penetrationsfestigkeiten erforderlich sind. Erfindungsgemäße Folien weisen dabei im Laminat zwischen zwei Scheiben Klarglas (2 mm Planilux®) Scherfestigkeiten von 6 - 30 N/mm², besonders von 8 - 20 N/mm² und insbesonders von 9 - 16 N/mm² auf.

Die erfindungsgemäß eingesetzten Polyvinylacetale sind als Acetalisierungsprodukte von Polyvinylalkohol (PVA) mit Aldehyden wie Butyraldehyd erhältlich. Erfindungsgemäße Folien können ein oder mehrere Polyvinylacetale enthalten, die sich in Molgewicht, Acetalisierungsgrad, Restalkoholgehalt oder Anzahl der Kohlenstoffatome der Acetalgruppe unterscheiden können.

Weiterhin können die genannten günstigen optischen Eigenschaften der erfindungsgemäßen Folie durch Selektion des zur Herstellung des Polyvinylacetals herangezogenen Polyvinylalkohol (PVA) verbessert werden. Liegen auf Stufe des PVA ungesättigte Einheiten in der Polymerkette als Fehlstellen vor, finden sich diese zwangsläufig auch im daraus erzeugten Polyvinylacetal wieder wodurch sich dessen Absorption von UV-Strahlung erhöht und Lichtstabilität verschlechtert. Die ungesättigten Einheiten können in Form von isolierten oder in Konjugation zueinander oder in Konjugation zu Carbonylbindungen stehenden Doppelbindungen vorliegen. Diese ungesättigten Einheiten lassen sich durch UV-Spektroskopie im PVA nachweisen.

Sehr hohe Anteile an Fehlstellen führen bei Messung des eingesetzten PVA in 4 Gew.%-iger Lösung in H₂O zu Extinktionen bei 280 nm von nahe 1. Zur Herstellung von erfindungsgemäß verwendetem Polyvinylacetal werden daher bevorzugt Polyvinylalkohole eingesetzt, die in einer 4 Gew.% wässrigen Lösung bei 280 nm Extinktionswerte von weniger als 0,5, von weniger als 0,3, insbesondere 0,2 und bevorzugt 0,1 aufweist.

Zusätzlich zu der Verwendung eines UV-Absorbers in erhöhter Einsatzmenge und der Verwendung von nicht zur Vergilbung neigenden phenolischen Antioxidantien und/oder der Verwendung von besonders fehlstellenarmen Polyvinylacetalen und/oder der Einstellung des Alkalititers können die erfindungsgemäßen Folien mit einem oder mehreren nicht-aromatischen Lichtstabilisatoren, insbesondere mit sterisch gehinderten Aminen vom Typ HALS und/oder sterisch gehinderten Aminoethern (NOR-HALS) ausgerüstet werden.

Erfindungsgemäße Folien enthalten bevorzugt 0,005 - 1 Gew.-%, besonders bevorzugt 0,01 - 0,5 Gew.-%, insbesondere 0,03 - 0,3 Gew.-% und am meisten bevorzugt 0,05 - 0,25 Gew.-% sterisch gehinderte Amine vom HALS oder NOR-HALS Typ als Lichtstabilisatoren.

Besonders geeignete sterisch gehinderte Amine sind solche der allgemeinen Formeln (5), (6) und/oder (7). 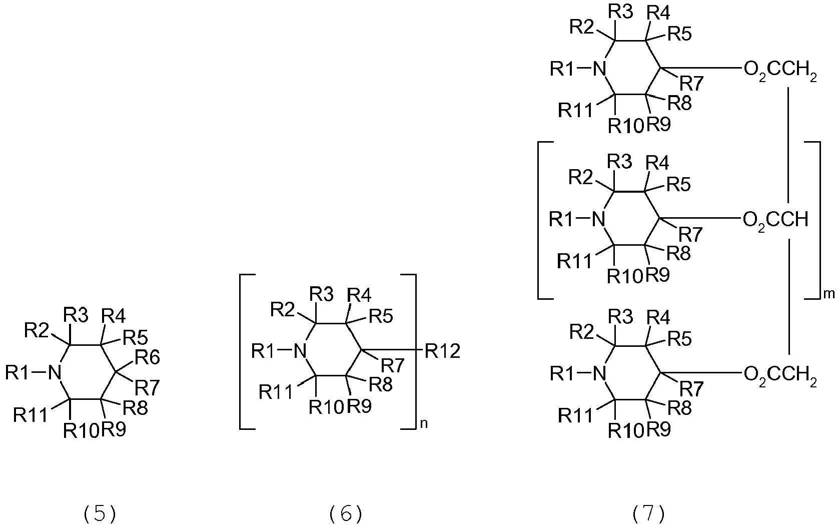 mit R1, R2, R3, R4, R5, R6, R7, R8, R9, R10, R11 = wie H, C1-C20 Alkyl, Hydroxyalkyl, Alkoxyalkyl, Acyloxyalkyl, jeweils unsubstituiert oder durch Aldehyd-, Keto- oder Epoxidgruppen substituiert
R12 = glatte Verbindung, C1 - C20 Alkyl, Hydroxyalkyl, Alkoxyalkyl, Acyloxyalkyl, jeweils unsubstituiert oder durch Aldehyd-, Keto- oder Epoxidgruppen substituiert
n = 2 - 4
m = 1 - 10.

Verbindungen dieser Art sind kommerziell erhältlich, beispielsweise durch die Produkte Tinuvin 123 (NOR-HALS), Tinuvin 144, Tinuvin 622, Tinuvin 770 sowie dessen Di-N-methyliertes Derivat der BASF (Ciba Specialities). Besonders gut geeignet sind beispielsweise Songlight 2920 der Firma Songwon International, ADK Stab LA-57, LA-52 oder LA-62 der Fa. Asahi Denka Co. oder UVINUL 4050 H der BASF SE.

Zur Herstellung von Polyvinylacetal wird Polyvinylalkohol in Wasser gelöst und mit einem Aldehyd wie z.B. Butyraldehyd, Formaldehyd oder Propionaldehyd unter Zusatz eines Säurekatalysators acetalisiert. Das ausgefallene Polyvinylacetal wird abgetrennt, neutral gewaschen, ggf. in einem alkalisch eingestellten wässrigen Medium suspendiert, danach erneut neutral gewaschen und getrocknet.

Die zur Acetalisierung eingesetzte Säure muss nach erfolgter Reaktion wieder neutralisiert werden. Ein geringer Gehalt an Alkalimetallionen kann unter anderem bei der Synthese des Polyvinylacetals durch Verzicht auf die üblicherweise zur Neutralisation des Katalysators angewandten Natrium- oder Kaliumhydroxide bzw. Carbonate oder durch gründliches Waschen des bei der Acetalisierung erhaltenen Polyvinylacetals erzielt werden. Alternativ zu den Basen NaOH oder KOH, kann die Katalysatorsäure aus dem Acetalisierungsschritt z.B. durch Einblasen von Kohlendioxid oder Ethylenoxid neutralisiert werden.

Der Polyvinylalkoholgehalt des Polyvinylacetals kann durch die Menge des bei der Acetalisierung eingesetzten Aldehyds eingestellt werden.

Es ist auch möglich, die Acetalisierung mit anderen oder mehreren Aldehyden mit 2-10 Kohlenstoffatomen (z.B. Valeraldehyd) durchzuführen.

Die auf weichmacherhaltigem Polyvinylacetal basierenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mehr als 98 Mol% hydrolysiert und enthalten 1 bis 10 Gew. auf Ethylen basierende Einheiten (z.B. Typ "Exceval" der Kuraray Europe GmbH).

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden.

Polyvinylacetale enthalten neben den Acetaleinheiten noch aus Vinylacetat und Vinylalkohol resultierende Einheiten. Die erfindungsgemäß verwendeten Polyvinylacetale weisen einen Polyvinylalkoholanteil von 12 - 24 Gew.%, bevorzugt von 14 - 23 Gew.%, bevorzugt von 16 - 22 Gew.%, bevorzugt von 17 - 21 Gew.% und insbesondere von 18 - 20 Gew.% auf.

Der Polyvinylacetatgehalt des erfindungsgemäß eingesetzten Polyvinylacetals liegt bevorzugt unter 5 Gew.%, unter 3 Gew.% oder unter 1 Gew.%, besonders bevorzugt unter 0,75 Gew.%, ganz besonders bevorzugt unter 0,5 Gew.% und insbesondere unter 0,25 Gew.%.

Aus dem Polyvinylalkoholanteil und dem Restacetatgehalt kann der Acetalisierungsgrad rechnerisch ermittelt werden.

Bevorzugt weisen die Folien einen Gesamtweichmachergehalt d.h. der Anteil aller Weichmacher in der Folie im Bereich von 5 - 45 Gew.%, 12 - 36 Gew.%, 14 - 32 Gew.%, 16 - 30 Gew.%, insbesondere 20 - 28 Gew.% auf. Erfindungsgemäße Folien bzw. damit verklebte Laminate können einen oder mehrere Weichmacher enthalten.

Gut geeignet als Weichmacher für die erfindungsgemäßen Folien sind eine oder mehrere Verbindungen ausgewählt aus der folgenden Gruppe Di-2-ethylhexylsebacat (DOS), Di-2-ethylhexyladipat (DOA), Dihexyladipat (DHA), Dibutylsebacat (DBS), Triethylenglykol-bis-n-heptanoat (3G7), Tetraethylenglykol-bis-n-heptanoat (4G7), Triethylenglykol-bis-2-ethylhexanoat (3GO bzw. 3G8) Tetraethylenglykol-bis-n-2-ethylhexanoat (4GO bzw. 4G8) Di-2-butoxyethyladipat (DBEA), Di-2-butoxyethoxyethyladipat (DBEEA) Di-2-butoxyethylsebacat (DBES), Di-2-ethylhexylphthalat (DOP), Di-isononylphthalat (DINP) Triethylenglykol-bis-isononanoat, Triethylenglykol-bis-2-propylhexanoat, Tris(2-ethylhexyl)phosphat (TOF), 1,2-Cyclohexandicarbonsäurediisononylester (DINCH), Diisononyladipat (DINA) und Dipropylenglykolbenzoat.

Ganz besonders geeignet als Weichmacher für die erfindungsgemäßen Folien sind Weichmacher, deren Polarität, ausgedrückt durch die Formel 100 x O/(C+H) kleiner/gleich 9,4 ist, wobei O, C und H für die Anzahl der Sauerstoff-, Kohlenstoff- und Wasserstoffatome im jeweiligen Molekül steht. Die nachfolgende Tabelle zeigt erfindungsgemäß einsetzbare Weichmacher und deren Polaritätswerte nach der Formel 100 x O/(C+H).

| Name | Abkürzung | 100 x O/(C+H) |
|---|---|---|
| Di-2-ethylhexylsebacat | (DOS) | 5,3 |
| Di-iso-nonyladipat | (DINA) | 5,3 |
| 1,2-Cyclohexandicarbonsäurediisononylester | (DINCH) | 5,4 |
| Di-2-ethylhexyladipat | (DOA) | 6,3 |
| Dihexyladipat | (DHA) | 7,7 |
| Dibutylsebacat | (DBS) | 7,7 |
| Triethylenglykol-bis-2-propylhexanoat | | 8,6 |
| Triethylenglykol-bis-i-nonanoat | | 8,6 |
| Di-2-butoxyethylsebacat | (DBES) | 9,4 |
| Triethylenglykol-bis-2-ethylhexanoat | (3G8) | 9,4 |

Weiterhin können die erfindungsgemäßen Mischungen oder Folien zusätzlich weitere Additive, wie zum Beispiel Antistatika, Füllstoffe, IR-Absorbierende Nanopartikel bzw. Chromophore, Farbstoffe, oberflächenaktive Substanzen, Bleichmittel, Stabilisatoren, Säure/Base-Puffer, Chelatbildner, Epoxygruppen enthaltende Verbindungen, Pigmente sowie Haftungsregulatoren enthalten.

Erfindungsgemäße Folien können zur Herstellung von Verbundglas d.h. zum Verkleben von mindestens zwei Glasscheiben oder als eine Glasscheibe mit einer weiteren transparenten steifen oder flexiblen Schicht verbindende Lage verwendet werden. Solche Verglasungen können vorteilhaft eingesetzt werden, wo es auf einen verbesserten UV-Schutz bei gleichzeitig hoher Transparenz im sichtbaren Bereich des Lichts ankommt, wie z.B. in Museen (sog. Museumsverglasung), Schaufensterverglasungen, Kraftfahrzeugen (Windschutzscheiben, Seitenverglasung, Glasdächer und Heckscheiben) oder Flugzeugverglasung. Insbesondere können die erfindungsgemäßen Folien auch in Funktionsbauteilen wie Photovoltaikmodulen (besonders für solche mit organischen Solarzellen), Display-Anwendungen (LED oder OLED Bildschirme, Fernseher, Computerbildschirme, Grossbildschirme), schaltbaren Glaselementen (besonders elektrochromen, photochromen, photoelektrochromen, bzw. des Typs "suspended particle device" oder Thermotrop) verwendet werden.

In den genannten Funktionsbauteilen schützt mindestens eine Lage der erfindungsgemäßen Folie eine dahinter befindliche aktive Schicht vor Schädigung durch Sonnenlicht bzw. UV-Strahlung. Im Fall photochromer Schichten kann durch Herausfiltern des UV-Anteils der Sonnenstrahlung zusätzlich deren Ansprechverhalten modifiziert werden, was stärker vom sichtbaren Licht als von UV-Strahlung beeinflusst wird.

### Prüf- und Messmethoden:

Die strahlungstechnischen Eigenschaften (Lichttransmissionsgrad TL, UV-Transmissionsgrad TUV, Transmission bei angegebener Wellenlänge T400; jeweils ausgedrückt in %) der zwischen 2 x 2 mm Planilux® laminierten Folie in Stärke 0,76 mm wurde gemäß DIN EN 410 auf einem UV/VIS-Spektrometer Perkin-Elmer Lambda 950 bestimmt.

Zur Bestimmung des Gelbwertes db der extrudierten Folie wird ein Verbundglas mit Folie in Stärke 0,76 mm mit zwei Scheiben 2 mm Planilux® auf dem ColorQuest XE in Einstellung Hunterlab 2°/C gemessen und dabei der Gelbwert vom Verbund b(Verbund) im CIELAB-Farbraum nach DIN EN ISO 11664-4 bestimmt. Bei dem Verfahren wird der Gelbwert des Glases b(Glaspaar) durch Einmessens des Scheibenpärchens der identischen Glascharge als Nullprobe herausgemittelt und der Beitrag der Zwischenschicht zur Gelbfärbung als Gelbwert db = b(Verbund) - b(Glaspaar) zahlenmäßig ermittelt.

Zur Beurteilung der Haftung einer PVB-Folie wurde der Kompressionsschertest in Anlehnung an DE 19756274 A1 an einem Glas/Glas-Laminat durchgeführt. Dafür wurden 10 Proben mit den Maßen 25,4 x 25,4 mm unter einem Winkel von 45° mit einem Vorschub von 2,5 mm/min in eine Prüfapparatur gemäß DE 19756274 A1 eingespannt und vermessen. Die Maximalkraft, die zur Abscherung der Folie vom Glas benötigt wird, bezogen auf die Probenfläche, wurde dann über die 10 Proben gemittelt.

### Beispiele

Es wurden Folien mit den Mischungen der in den nachfolgenden Tabellen aufgeführten Zusammensetzungen hergestellt und als Laminat zwischen 2 Glasscheiben vom Typ Planilux® der Stärke 2 mm verarbeitet und untersucht.

Vergleichsbeispiel 1 (VB1) mit einer zu geringen Konzentration an UV- Absorber des Benzotriazol-Typs nach Formel (1) zeigt eine hohe Transmission der Strahlung im Bereich von 380 - 400 nm.

Das eine erhöhte Konzentration an UV-Absorber aufweisende Laminat gemäß erfindungsgemäßem Beispiel 1 besitzt im gesamten UV-A-Bereich bis hin zu einer Wellenlänge von 400 nm eine Transmission kleiner 1%. Gleichzeitig weist diese Folie durch die Verwendung eines geeigneten Antioxidants des Typs Songnox 2450 einen geringen Gelbwert auf.

Das erfindungsgemäße Beispiel 2 zeigt das selbst bei Verwendung von 2000 ppm des geeigneten Antioxidants des Typs Songnox 2450 keine signifikante Erhöhung des Gelbwertes der Folie auftritt. Wird hingegen gemäß Vergleichsbeispiel 2 (VB2) ein nach Formel 2 ungeeignetes Antioxidants in gleicher Konzentration verwendet, so weist die Folie einen stark erhöhten Gelbwert auf.

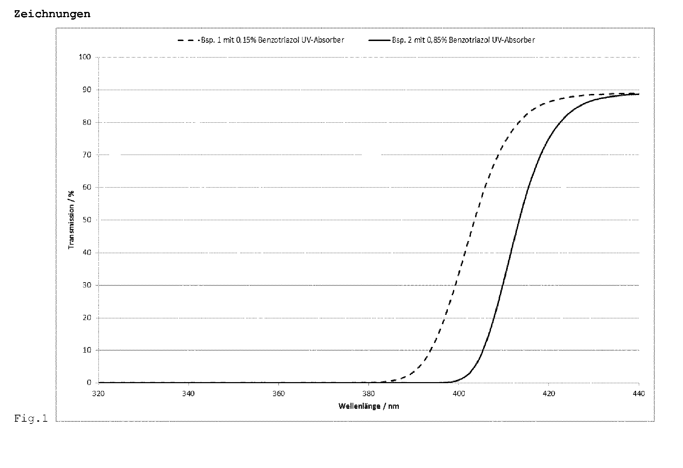

Fig. 1 zeigt die Transmission von Glaslaminaten nach Vergleichsbeispiel 1 (VB1) und erfindungsgemäßes Beispiel 1 im Bereich zwischen 320 und 440 nm. Durch die erfindungsgemäß hohe Konzentration des UV-Absorbers wird die Absorption bzw. Transmission der Folie zu längeren Wellenlängen verschoben. Hierdurch ist ein Schutz vor UV Strahlung praktisch bis zu den Wellenlängen des sichtbaren Bereichs des Lichtes gegeben.

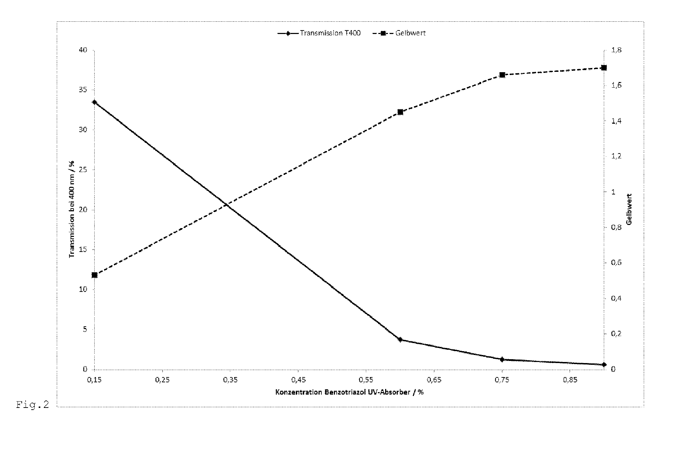

Fig. 2 zeigt den Zusammenhang zwischen der Konzentration an UV-Stabilisator und der resultierenden UV-Transmission bei 400 nm sowie den Gelbwert. Es zeigt sich, dass durch die Kombination mit einem geeigneten Antioxidanz bei steigender Konzentration an UV-Stabilisator eine zunehmend geringere UV-Transmission der Folie bei 400 nm erreicht werden kann, ohne dass der Gelbwert zu stark ansteigt. Dieser Effekt wird durch die erfindungsgemäße Folienzusammensetzung erreicht.

Daher sind Folien mit einer erfindungsgemäßen Zusammensetzung gut für Anwendungen geeignet, die einen besonders hohen UV-Schutz benötigen und gleichzeitig keine Einschränkung der Lichttransmission durch einen anfänglich zu hohen Gelbwert oder nachträgliche Vergilbung bei Alterung aufweisen.

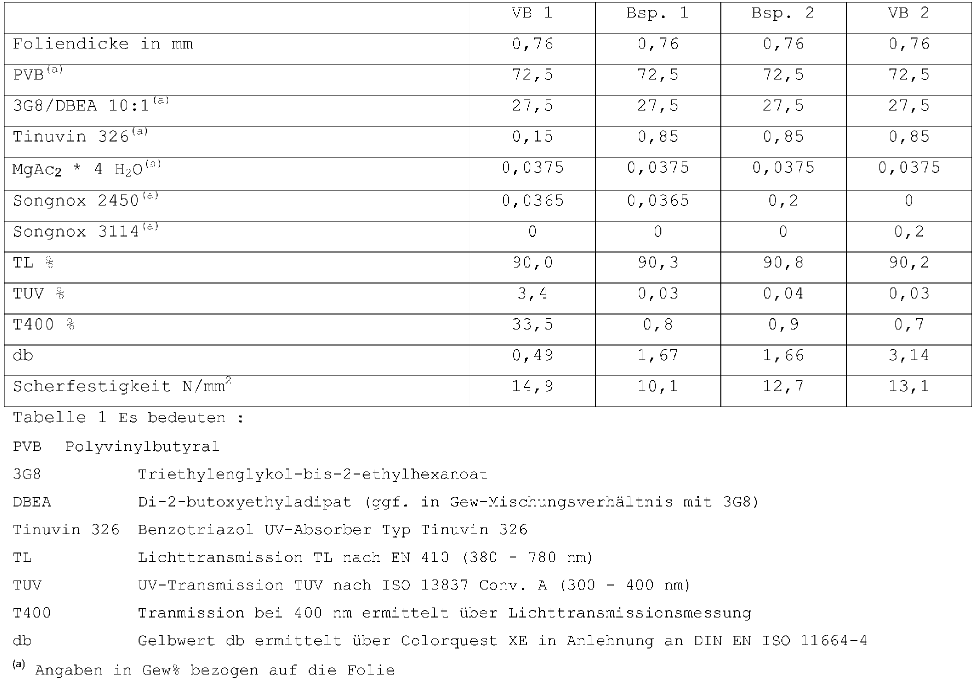

## Patentansprüche

1. Weichmacherhaltige Folie,die in einer Dicke von 0,76 mm bei Messung gemäß EN 410 zwischen 2 x 2 mm Floatglas bei 400 nm eine Transmission kleiner 20% und einen Gelbwert db kleiner 3 aufweist, enthaltend mindestens ein Polyvinylacetal, mindestens einen Weichmacher und mindestens einen UV-Absorber **dadurch gekennzeichnet, dass** die Folie
- als UV Absorber 0,5 bis 5 Gew.% einer oder mehrerer Verbindungen der Formel (1) 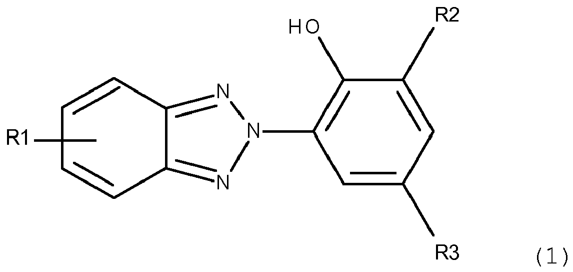 mit R1 = H, Halogenatom und R2, R3 = Alkyl-, Hydroxyalkyl-, Alkoxyalkyl-, Acyloxyalkylrest mit 1 bis 20 Kohlenstoffatomen, jeweils unsubstituiert oder durch Aldehyd-, Keto- oder Epoxidgruppen substituiert
- und als Antioxidants 0.005 - 0.5 Gew. % mindestens eine Verbindung der Formel (3) 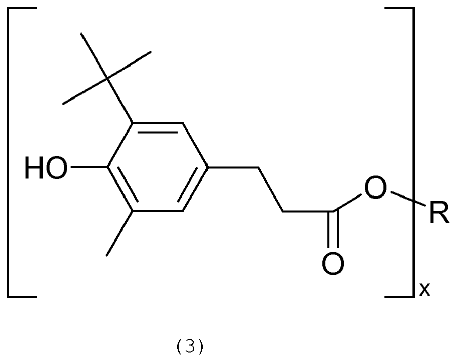 mit R = Kohlenwasserstoffradikal eines polyfunktionellen Alkohols, Oligoglykole mit 1 bis 10 Glykoleinheiten oder Kohlenwasserstoffrest mit 1 bis 20 Kohlenstoffatomen sowie X = 1, 2, 3 oder 4.

2. Folie nach Anspruch 1, **dadurch gekennzeichnet, dass** als UV-Absorber der Formel (1) 2-(3-tert-butyl-2-hydroxy-5-methylphenyl)-5-chloro-2H-benzotriazol eingesetzt wird.

3. Folie nach einem der Ansprüche 1 oder 2, **dadurch gekennzeichnet, dass** die Folie weniger als 1500 ppm an Antioxidantien der Formel (2) oder des Typs Hostanox 03 enthält 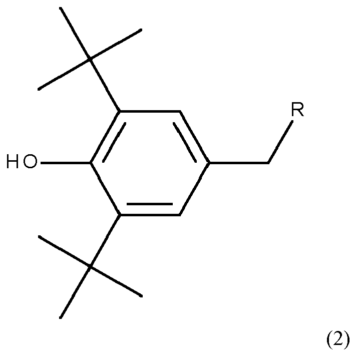 mit R = Kohlenwasserstoffradikal eines polyfunktionellen Alkohols, Oligoglykole mit 1 bis 10 Glykoleinheiten Kohlenwasserstoffrest mit 1 bis 20 Kohlenstoffatomen, N,P, S- substituierte Kohlenwasserstoffreste mit 1 bis 30 Kohlenstoffatomen oder Carbonsäureesterreste mit 1 bis 30 Kohlenstoffatomen in der Alkoholgruppe.

4. Folie nach einem der Ansprüche 1 bis 3 **dadurch gekennzeichnet, dass** die Folie einen Alkalititer von 2-70 aufweist.

5. Folie nach einem der Ansprüche 1 bis 4, **dadurch gekennzeichnet, dass** die Folie 0,001 bis 1 Gew.% nichtaromatische Lichtstabilisatoren von HALS und/oder NOR-HALS-Typ enthält.

6. Folie nach einem der Ansprüche 1 bis 5, **dadurch gekennzeichnet, dass** das Polyvinylacetal durch Acetalisierung von Polyvinylalkohol hergestellt wird, der in einer 4 Gew.% wässrigen Lösung eine Extinktion bei 280 nm von weniger als 0,5 aufweist.

7. Folie nach einem der Ansprüche 1 bis 6, **dadurch gekennzeichnet, dass** die Folie mehr als 5 ppm Metallionen ausgewählt aus der Gruppe Erdalkalimetalle, Zink, und Aluminium und weniger als 150 ppm Alkalimetallionen aufweist.

8. Folie nach einem der Ansprüche 1 bis 7, **dadurch gekennzeichnet, dass** die Folie eine UV-Transmission gemäß ISO 13837 Conv. A (300 - 400 nm) von kleiner 1% aufweist.

9. Folie nach einem der Ansprüche 1 bis 8, **dadurch gekennzeichnet, dass** die Folie in einem Laminat zwischen zwei Scheiben Klarglas eine Scherfestigkeit von 6 - 30 N/mm² aufweist.

10. Folie nach einem der Ansprüche 1 bis 9, **dadurch gekennzeichnet, dass** die Folie bei einer Dicke von 0,76 mm in einem Laminat zwischen zwei Scheiben Klarglas mit jeweils einer Dicke von 2 mm eine Lichttransmission bei 430 nm gemäß EN 410 von größer 75% aufweist.

11. Verwendung einer Folie nach einem der Ansprüche 1 bis 10, zur Herstellung von Museumsverglasungen, Schaufensterverglasungen, Kraftfahrzeugverglasung Flugzeugverglasung, Photovoltaikmodule oder für Display-Anwendungen.
